# EUROPÄISCHE PATENTSCHRIFT

(11) **EP 0 437 642 B1**
(45) Veröffentlichungstag und Bekanntmachung des Hinweises auf die Patenterteilung: **09.11.1994**
(21) Anmeldenummer: 90100666.8
(22) Anmeldetag: 13.01.1990
(51) Int. Cl.: H01R 39/64

(54) **Verbindungselement zur Herstellung einer elektrischen Verbindung zwischen zwei gegeneinander verdrehbaren Teilen**
Connector element for the settlement of an electrical connection between two parts that can be rotated relatively to each other
Elément de connection pour établir une connection électrique entre deux parties qui peuvent être tournées l'une par rapport à l'autre

(43) Veröffentlichungstag der Anmeldung: 24.07.1991
(73) Patentinhaber: Petri AG, D-63704 Aschaffenburg (DE)
(72) Erfinder: Bonn, Helmut, D-8751 Haibach (DE); Zeller, Gregor, D-8750 Aschaffenburg (DE)
(74) Vertreter: Eyer, Eckhardt Philipp, Dipl.-Ing.

(56) Entgegenhaltungen:
- DE-A- 1 926 887
- DE-A- 2 131 171
- DE-B- 1 135 541
- FR-A- 1 283 116

## Beschreibung

Die Erfindung geht aus von einem Verbindungselement zur Herstellung einer elektrischen Verbindung zwischen zwei gegeneinander verdrehbaren Teilen, gemäß dem Oberbegriff des Patentanspruches 1.

Es sind Stromübertragungselemente der vorstehend beschriebenen Art bekannt geworden, bei denen der drehbare, mit dem Lenkrad verbundene Rotor mit einem fest installierten Flachband-Kabel als Anschluß-Leitung versehen ist. Diese bekannten Stromübertragungselemente sind herstellungstechnisch und damit kostenmäßig aufwendig, wobei als wesentlicher weiterer Nachteil eine Anpassung an - nach Anzahl der erforderlichen Pole - unterschiedliche Übertragungsverhältnisse nach der Montage nicht mehr möglich ist.

Der vorliegenden Erfindung liegt als Aufgabe die Schaffung eines Stromübertragungselementes der beschriebenen Art zugrunde, das eine weitgehende Standardisierung und Anpassung an die geforderten Übertragungsverhältnisse erst bei der Montage ermöglicht. Diese Aufgabe wird mit einem Stromübertragungselement mit den im Patentanspruch 1 wiedergegebenen Merkmalen gelöst.

Durch die Ausbildung des Stromübertragungselementes als eine sowohl den Rotor als auch den Stator umfassende, mit jeweils einer Steckbuchse für einen verrastbaren Stiftstecker versehene Kassette ist eine Standardisierung durch Anbringung von vielpoligen Steckbuchsen möglich, die bei der Montage im Kraftfahrzeug mit einem auf den jeweiligen Fahrzeugtyp abgestimmten zwei- oder mehrpoligen Anschlußleitung verbunden werden können. Es kann somit mit nur wenigen standardisierten Typen allen beim Fahrzeughersteller auftretenden Anforderungen genügt werden, wobei einerseits durch die Verrastung der Stiftstecker in der Steckbuchse eine sichere und ungewolltes Lösen ausschließende Verbindung erzielt wird und darüberhinaus eine größere Dispositionsfreiheit erreicht wird insofern, als die Anbringung der Kabelverbindungen wahlweise beim Hersteller des Stromübertragungselementes oder beim Fahrzeughersteller erfolgen kann.

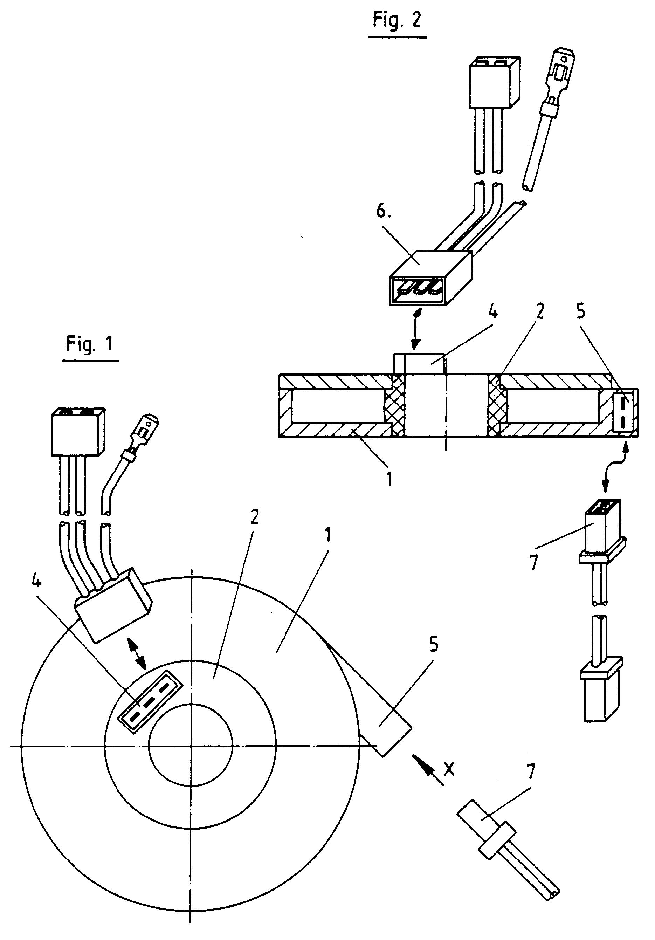

Weitere Ausführungsformen und Vorteile ergeben sich aus der nachfolgenden Beschreibung, in der die Erfindung anhand der beiliegenden Zeichnung beispielsweise erläutert ist. Es zeigen
- Fig. 1: eine Sicht auf ein Stromübertragungselement mit Anschlußleitungen in Sprengdarstellung
- Fig. 2: einen Schnitt durch das in Fig. 1 wiedergegebene Stromübertragungselement mit ebenfalls in Sprengdarstellung dargestellten Anschlußleitungen
- Fig. 3: ein Flachbandkabel mit angeschlagenen Stiftsteckern
- Fig. 4 bis 6: verschiedene Ausführungsformen eines mit Steckertiften versehenen Falchbandkabels
- Fig. 7: einen Schnitt durch die in Fig. 6 wierdergegebene Ausführungsform.

Das in der Zeichnung wiedergegebene Verbindungselement zur Herstellung einer elektrischen Verbindung zwischen zwei gegeneinander verdrehbaren Teilen, insbesondere zwischen der Lenksäule und dem Lenkrad eines Kraftfahrzeuges, besteht aus einem an der Lenksäule befestigbaren Statorteil 1 und einem an der Lenkradnabe befestigbaren Rotorteil 2 sowie einem Flachbandkabel 3 als Stromleiter, das auf dem Rotorteil 2 geführt und zur Herstellung einer Verbindung mit der Stromquelle einerseits und dem Verbraucher andererseits durch die Wandungen des Rotorteils 2 und des Statorteils 1 geführt ist. Das Statorteil 1 und das Rotorteil 2 des Verbindungselementes sind zu einer Kassette verbunden und mit je einer mehrpoligen Steckbuchse 4, 5 zur Aufnahme jeweils eines verrastbaren Stiftsteckers 6, 7 mit einer beliebigen, maximal der Zahl der Pole der Steckbuchse 4, 5 entsprechenden Polzahl versehen. Am Gehäuse des Statorteils 1 ist eine Kurzschlußbrücke befestigt, während die Steckbuchse des Rotorteils 2 mit einer Aufnahme zum Anschluß einer am Generatorkabel angeordneten Kurzschlußbrücke versehen ist.

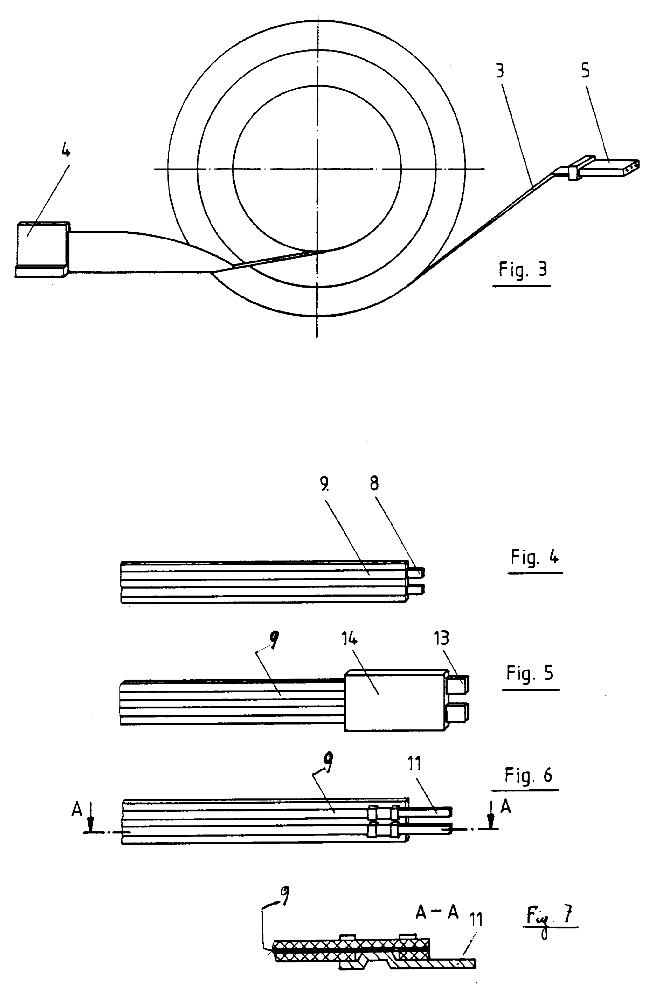

In einer Ausführungsform der Erfindung können - siehe Fig. 4 - die Steckerstifte von den abisolierten Enden 8 der Leiterdrähte 9 gebildet sein, wobei - siehe Fig. 6 und 7 - erforderlichenfalls die Leiterdrähte 9 mittels angeschlagener Kontaktstifte 11 verstärkt sein können. Es können jedoch auch - siehe Fig. 5 - die Leiterdrähte 9 abgeschliffen und ein die Steckerstifte 13 enthaltendes Kontaktteil 14 an das Flachbandkabel angeschlagen sein. Die Erfindung ist vorstehend am Beispiel eines einfachen Stromübertragungselementes mit zweipoligem Anschluß dargestellt, besondere Vorteile ergeben sich jedoch bei Einsatz an Stromübertragungselementen mit mehrpoligen Anschlüssen. Aus den Erläuterungen ergibt sich jedoch ohne weiteres der wesentliche Vorteil des erfindungsgemäßen Stromübertragungselementes dahingehend, daß es in einer von dem einzelnen Fahrzeugtyp unabhängigen Ausbildung hergestellt und wahlweise beim Hersteller des Stromübertragungselementes oder beim Fahrzeughersteller entsprechend den jeweils, vom Fahrzeugtyp bestimmten Anforderungen durch Anstecken der entsprechenden Abgänge ergänzt werden kann. Durch die Verrastung der Stiftstecker in den Buchsen wird hierbei eine sichere und unlösbare Verbindung gewährleistet.

## Patentansprüche

1. Verbindungselement zur Herstellung einer elektrischen Verbindung zwischen zwei gegeneinander verdrehbaren Teilen, insbesondere zwischen der Lenksäule und dem Lenkrad eines Kraftfahrzeuges, bestehend aus einem an der Lenksäule befestigbaren Statorteil (1) und einem an der Lenkradnabe befestigbaren Rotorteil (2) sowie einem Flachbandkabel (3) als Stromleiter, das auf dem Rotorteil (2) geführt und zur Herstellung einer Verbindung mit der Stromquelle einerseits und dem Verbraucher andererseits durch die Wandungen des Rotorteils (2) und des Statorteils (1) geführt ist, wobei die Stromleiter als Transportschutz mit einer bei der Endmontage lösbaren Kurzschlußbrücke versehen sind, dadurch gekennzeichnet, daß das Statorteil (1) und das Rotorteil (2) des Verbindungselementes zu einer Kassette verbunden und mit je einer mehrpoligen Steckbuchse (4, 5) zur Aufnahme jeweils eines verrastbaren Stiftsteckers (6, 7) mit einer beliebigen, maximal der Zahl der Pole der Steckbuchse (4, 5) entsprechenden Polzahl versehen sind.

2. Verbindungselement nach Anspruch 1, dadurch gekennzeichnet, daß am Gehäuse des Statorteils (1) eine Kurzschlußbrücke befestigt und die Steckbuchse (5) des Rotorteils (2) mit einer Aufnahme zum Anschluß einer am Generatorkabel angeordneten Kurzschlußbrücke versehen ist.

3. Verbindungselement nach Anspruch 1 oder 2, dadurch gekennzeichnet, daß die Steckerstifte von den abisolierten Enden (8) der Leiterdrähte (9) gebildet sind.

4. Verbindungselement nach Anspruch 3, dadurch gekennzeichnet, daß die Leiterdrähte (9) mittels angeschlagener Kontaktstifte (11) verstärkt sind.

5. Verbindungselement nach Anspruch 3, dadurch gekennzeichnet, daß die Leiterdrähte (9) abgeschliffen sind und ein die Steckerstifte (13) enthaltendes Kontaktteil (14) an das Flachbandkabel angeschlagen ist.

6. Verbindungselement nach einem der Ansprüche 1 bis 5, dadurch gekennzeichnet, daß das Statorteil (1) und/oder das Rotorteil (2) mit jeweils einer radialen und einer achsparallelen Steckbuchse zum wahlweise radialen oder axialen Anschluß der Verbindungskabel versehen sind.

7. Verbindungselement nach einem der Ansprüche 1 bis 6, dadurch gekennzeichnet, daß die Kurzschlußbrücke in der Buchse des Statorgehäuses angeordnet und durch einstecken des Stiftsteckers geöffnet wird.

## Claims

1. Connecting element for establishing an electrical connection between two component parts, which are rotatable relative to each other, more especially between the steering column and the steering wheel of a motor vehicle, comprising a stator part (1), which is mountable on the steering column, and a rotor part (2), which is mountable on the steering wheel hub, as well as a flat ribbon-shaped cable (3), which serves as a current conductor, said cable being guided on the rotor part (2) and extending through the walls of the rotor part (2) and of the stator part (1) in order to establish a connection with a source of current, on the one hand, and a consuming device, on the other hand, the current conductors being provided with a short-circuiting bridge, which is detachable during final assembly and serves as protection in transit, characterised in that the stator part (1) and the rotor part (2) of the connecting element are connected to form a casing and are each provided with a multipolar plug socket (4, 5) for receiving a respective locatable pin plug (6, 7) having any desired number of poles, the maximum number of which corresponds to the number of poles of the plug socket (4, 5).

2. Connecting element according to claim 1, characterised in that a short-circuiting bridge is mounted on the housing of the stator part (1), and the plug socket (5) of the rotor part (2) is provided with a receiving means for the connection of a short-circuiting bridge disposed on the generator cable.

3. Connecting element according to claim 1 or 2, characterised in that the plug pins are formed by the stripped ends (8) of the conductor wires (9).

4. Connecting element according to claim 3, characterised in that the conductor wires (9) are reinforced by means of attached contact pins (11).

5. Connecting element according to claim 3, characterised in that the conductor wires (9) are abraded, and a contact part (14), which includes the plug pins (13), is attached to the flat ribbon-like cable.

6. Connecting element according to one of claims 1 to 5, characterised in that the stator part (1) and/or the rotor part (2) are each provided with a radial plug socket and an axis-parallel plug socket for the selective radial or axial connection of the connecting cables.

7. Connecting element according to one of claims 1 to 6, characterised in that the short-circuiting bridge is disposed in the socket for the stator housing and is opened by the insertion of the pin plug.

## Revendications

1. Elément de connexion pour l'établissement d'une connexion électrique entre deux pièces qui peuvent tourner l'une par rapport à l'autre, en particulier entre la colonne de direction et le volant d'un véhicule automobile, se composant d'une partie stator (1) destinée à être fixée à la colonne de direction et d'une partie rotor (2) destinée à être fixée au moyeu du volant, ainsi que d'un câble en ruban plat (3) servant de conducteurs, qui passe sur la partie rotor (2) et qui, pour l'établissement d'une connexion à la source de courant d'une part et au dispositif consommateur d'autre part, traverse les parois de la partie rotor (2) et de la partie stator (1), les conducteurs étant munis, pour leur protection au cours du transport, d'un pont de court-circuit destiné à être détaché lors du montage final, caractérisé en ce que la partie stator (1) et la partie rotor (2) de l'élément de connexion sont assemblées en une cassette et sont munies chacune d'une fiche femelle multicontact (4, 5) pour recevoir chacune un connecteur d'ergots encliquetable (6, 7) ayant un nombre quelconque de pôles correspondant au maximum au nombre des pôles de la fiche femelle (4, 5).

2. Elément de connexion selon la revendication 1, caractérisé en ce qu'un pont de court-circuit est fixé au boîtier de la partie stator (1) et la fiche femelle (5) de la partie rotor (2) est munie d'un logement pour la connexion d'un pont de court-circuit disposé sur le câble du générateur.

3. Elément de connexion selon la revendication 1 ou 2, caractérisé en ce que les contacts mâles sont constitués par les extrémités dénudées (8) des fils conducteurs (9).

4. Elément de connexion selon la revendication 3, caractérisé en ce que les fils conducteurs (9) sont renforcés au moyen de fiches de contact serties (11).

5. Elément de connexion selon la revendication 3, caractérisé en ce que les fils conducteurs (9) sont meulés et un élément de contact (14) qui contient les contacts mâles (13) est serti sur le câble en ruban plat.

6. Elément de connexion selon l'une quelconque des revendications 1 à 5, caractérisé en ce que la partie stator (1) et/ou la partie rotor (2) sont munies respectivement d'une fiche femelle radiale et d'une fiche femelle parallèle à l'axe pour que le raccordement radial ou axial des câbles de connexion soit possible au choix.

7. Elément de connexion selon l'une quelconque des revendications 1 à 6, caractérisé en ce que le pont de court-circuit est disposé dans la douille du boîtier de stator et est ouvert par l'enfichage du connecteur à ergots.
